# EUROPÄISCHE PATENTSCHRIFT

(11) **EP 1 509 448 B1**
(45) Veröffentlichungstag und Bekanntmachung des Hinweises auf die Patenterteilung: **22.03.2006**
(21) Anmeldenummer: 03740019.9
(22) Anmeldetag: 22.05.2003
(51) Int. Cl.: B64D 25/00, B64D 17/80, B64C 25/56

(54) **LUFTFAHRZEUG MIT EINER RETTUNGSEINRICHTUNG**
AIRCRAFT COMPRISING A RESCUE DEVICE
AERONEF EQUIPE D'UN DISPOSITIF DE SECOURS

(30) Priorität: 23.05.2002 DE 10222712
(43) Veröffentlichungstag der Anmeldung: 02.03.2005
(73) Patentinhaber: Mellmann, Gerhard, 19288 Warlow (DE)
(72) Erfinder: Mellmann, Gerhard, 19288 Warlow (DE)
(74) Vertreter: Jaap, Reinhard
(86) Internationale Anmeldenummer: PCT/DE2003/001669
(87) Internationale Veröffentlichungsnummer: WO 2003/099656

(56) Entgegenhaltungen:
- DE-A- 1 756 581
- DE-A- 4 320 470
- DE-A- 19 847 546
- US-A- 3 622 108
- US-A- 4 298 177

## Beschreibung

Die Erfindung bezieht sich auf ein Luftfahrzeug nach dem Oberbegriff des Anspruchs 1. Derartige Luflfahrzeuge werden überwiegend im zivilen Reiseflugverkehr oder im Sportflugbetrieb eingesetzt.

Gemessen an der Anzahl der Flugbewegungen als auch an der Anzahl der beförderten Passagiere nimmt der Flugverkehr weltweit im starken Maße zu. Damit verbunden sind aber auch eine hohe Anzahl von Flugzeugabstürzen, bei denen ein hoher materieller Schaden entsteht und viele Menschen ihr Leben lassen müssen.
Es hat bislang nicht an Vorschlägen gemangelt, Rettungssysteme an Flugzeugen einzusetzen, um diese Schäden zu verhindern oder zumindest zu verringern. Letztendlich wurden diese Vorschläge nicht umgesetzt, weil sie nicht wirkungsvoll oder zu teuer waren.

So hat der Anmelder mit der DE 198 47 546 A1 eine neuartige Rettungseinrichtung vorgestellt, die aus einem tragfähigen und airbagartig zu füllenden Ballon und einem Hilfsantrieb besteht. In Luftnot werden alle überflüssigen Rumpfteile des Luftfahrzeuges abgesprengt und der Ballon explosionsartig mit einem Traggas gefüllt. Mit Hilfe der Tragfähigkeit des Ballons und mit Unterstützung des Hilfsantriebes wird die Insassenkabine nach dem Prinzip eines Luftschiffes sicher zur Erde geführt. Damit wird zwar ein hoher Sicherheitsstandard erreicht, weil diese Rettungseinrichtung manövrierfähig ist und weil die Tragfähigkeit des Ballons über die Füllmenge des Traggases an den konkreten Lastfall angepasst werden kann. Es ist aber von Nachteil, dass eine ausreichende Flughöhe vorhanden sein muss, zumal ein tragfähiger Ballon ein verhältnismäßig großes Volumen haben muss und daher eine relativ lange Füllzeit benötigt.

Es ist auch allgemein bekannt, einsitzige Militärflugzeuge mit einem Schleudersitz auszurüsten, um den Flugzeugführer in Flugnot ins Freie zu kalapuhieren und mit Hilfe eines Fallschirmes schadlos zur Erde zu bringen. Damit wird zwar in lobenswerter Weise Menschenleben gerettet, das Luftfahrzeug muss aber in jedem Fall aufgegeben werden. Außerdem lassen sich aus wirtschaftlichen Gründen solche Schleudersitze nicht in mehrsitzigen Flugzeugen oder in Passagiermaschinen einsetzen.

Es sind auch viele Lösungen bekannt, das Leben aller Flugzeuginsassen dadurch zu retten, in dem das gesamte Flugzeug oder eine von überflüssigen Rumpfteilen freigesprengte Insassenkabine mit einem oder mehreren Fallschirmen zur Erde gebracht werden soll. Rettungseinrichtungen dieser Art sind in ihrer Verwirklichung immer daran gescheitert, dass die Sinkgeschwindigkeit des notlandenden Flugzeuges oder der großräumigen Insassenkabine mit Fallschirme nicht auf das erforderliche Maß reduziert werden konnte. Ein weiterer Nachteil besteht darin, dass Fallschirme ihre Wirkung nur dann entfalten, wenn sie in einer ausreichenden Flughöhe geöffnet werden, was nicht immer gewährleistet ist. Damit ist diese Rettungseinrichtung wirkungslos, weil harte Aufschläge auf die Erdoberfläche nicht zu vermeiden sind und Menschen und Material weiterhin gefährdet sind.

In der DE 196 25 926 A1 wird daher vorgeschlagen, ein Luftfahrzeug mit einem oder mehreren Fallschirmen und mit zusätzlichen, an seiner Rumpfunterseite angeordneten Airbags auszurüsten. Diese Airbags werden unmittelbar über der Erdoberfläche gezündet, um den Aufprall des am Fallschirm hängenden und zu schnell absinkenden Luftfahrzeuges oder der Insassenkabine abzumindern. Diese Rettungseinrichtung ist aber ebenfalls dann ohne Wirkung, wenn die Flugnot unterhalb einer Mindesthöhe stattfindet und der Fallschirm nicht mehr rechtzeitig geöffnet werden kann. Den Aufprall eines ungebremsten oder eines zu gering abgebremsten Luftfahrzeuges vermögen die Airbags nicht ausreichend abzufedern.

In der DE-OS 1 756 581 ist nun ein Verfahren und eine Einrichtung zur Rettung der Insassen eines Flugzeuges beschrieben, bei der mehrere Fallschirme mit einem tragfähigen Ballon kombiniert sind. Dabei wird bei Eintritt der Flugnot gleichzeitig der Fallschirm geöffnet und der Ballon explosionsartig mit einem Traggas gefüllt. Mit dem Einsatz des zusätzlichen Ballons wird zwar die Sinkgeschwindigkeit weiter verringert , aber auch dieses Rettungssystem bleibt bei einer nicht ausreichenden Flughöhe wirkungslos.

Alle mit Fallschirmen ausgerüsteten Rettungseinrichtungen haben gemeinsam, dass die Fallschirme eine vorbestimmte und immer konstante Tragfähigkeit aufweisen. Andererseits sind die Massenkräfte des in Not geratenden Luftfahrzeuges in der Regel unterschiedlich, was auf eine von Flug zu Flug unterschiedliche Güterbeladung und/oder eine unterschiedliche Personenbesetzung zurückzuführen ist. Dadurch ist nicht auszuschließen, dass das Luftfahrzeug trotzt der Rettungseinrichtungen hart aufschlägt und Schäden am Material und am Menschen verursacht.

Der Erfindung liegt daher die Aufgabe zu Grunde, die Sinkgeschwindigkeit eines in Luftnot befindlichen Luftfahrzeug zum Zeitpunkt der Erdberührung auf ein solches Maß zu verringern, dass Menschenleben nicht gefährdet und materieller Schaden weitestgehend vermieden werden.

Diese Aufgabe wird durch die kennzeichnenden Merkmale des Anspruches 1 gelöst. Weitere Ausgestaltungsmöglichkeiten ergeben sich aus den Unteransprüchen 2 bis 5. Im neuen Luftfahrzeug sind in Bezug auf die Tragfähigkeit der Rettungseinrichtung die Vorzüge eines Ballons und eines Fallschirmes vereint. So öffnet der Fallschirm in kürzester Zeit, sodass unverzüglich in einer ersten Phase eine erste Abbremsung der Sinkgeschwindigkeit eintritt. Mit dem verzögerten Öffnen des Ballons wird in einer zweiten Phase eine zweite Abbremsung der Sinkgeschwindigkeit eingeleitet. Diese stufenweise Abbremsung vermeidet weitestgehend physische und psychische Belastungen der Insassen. Dabei ist von besonderem Vorteil, dass die Tragfähigkeit des Ballons durch die Wahl der Füllmenge des Traggases regelbar ist. Damit kann in Abhängigkeit von der vorhandenen Belastung des Luftfahrzeuges Einfluss auf die Sinkgeschwindigkeit genommen werden und eine akzeptable Sinkgeschwindigkeit die nicht über b - 7 m/s liegend darf, realisiert werden.
Diese Vorzüge werden noch ergänzt durch die Vorzüge eines Airbags, der praktisch in einer dritten Phase der Abbremsung der Sinkgeschwindigkeit das Luftfahrzeug sanft aufsetzen lässt. Dabei ist das sanfte Aufsetzen darauf zurückzuführen, dass der neue tragfähige Ballon ein größeres Volumen als übliche Airbags aufweist und daher eine geringere Bremshärte besitzt.
In gewisser Weise beruhigend für die Insassen ist auch, dass mit dem Fallschirm und dem Ballon zwei getrennt und selbstständig voneinander wirkenden Bremssysteme vorhanden sind, die bei Ausfall eines der beiden Systeme immer noch die Aussicht auf ein gütliches Ende der Luftnot belässt.
Es ist zweckmäßig, wenn mehrere Ballons mit einer ungeraden Anzahl verwendet werden und der mittlere Ballon als ein Hauptballon mit einem größeren Volumen ausgeführt wird. Damit wird auch die Airbagfunktion in eine erste Phase, in der nur der Hauptballon beteiligt ist, und eine zweite Phase, in der alle Ballons mitwirken, aufgeteilt.
Es kann aber auch von Vorteil sein, wenn mehrere Ballons mit einem gleichen Volumen eingesetzt werden, dann wird ein gerades Aufsetzen ermöglicht.
Ein Vorteil kann auch darin bestehen, dass die Ballons länglich ausgeführt sind und in paralleler Ausrichtung zur Achse des Luftfahrzeuges angeordnet sind und wenn sich die Länge der Ballons an die Länge des Luftfahrzeuges orientiert.
Es versteht sich, dass die Erfindung auch die Verwendung nur eines Ballons mit einschließt, wenn dieser Ballon eine entsprechende flächige Ausdehnung hat.

Die Erfindung soll anhand eines Ausführungsbeispieles näher erläutert werden.

Dazu zeigen:
- Fig. 1:: ein erfindungsgemäßes Luftfahrzeug in der Vorderansicht,
- Fig. 2:: das Luftfahrzeug in der Phase des Öffnens des Fallschirmes und
- Fig. 3:: das Luftfahrzeug in der Phase des Aufrichtens des Fallschirmes.

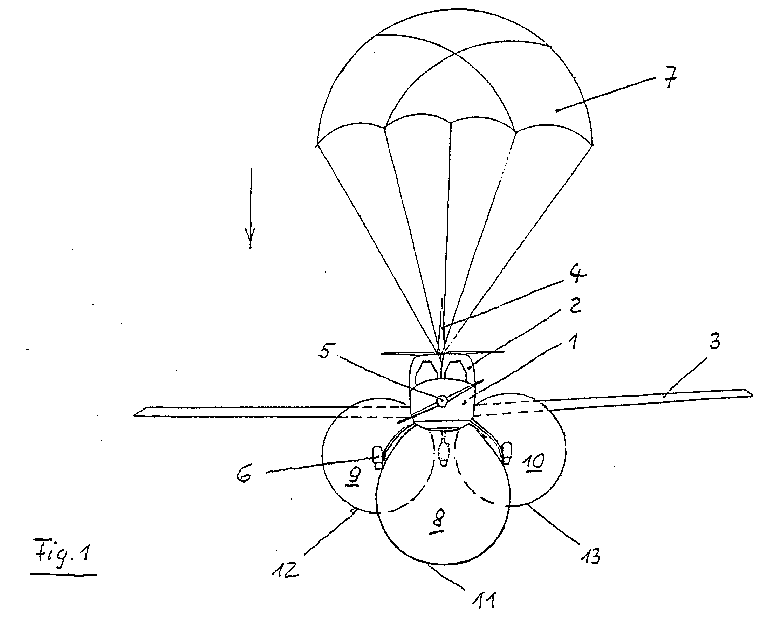

Nach den Fig. 1 bis 3 besteht das Luftfahrzeug in üblicher Ausbildung aus einem Rumpf 1 mit einer Insassenkabine 2, zwei Tragflügel 3, einem Leitwerk 4 und einem Antriebsmotor 5. Unterhalb des Rumpfes 1 befindet sich ein Fahrwerk 6. Im Dachbereich des Rumpfes 1 und zwar im Bereich des Massenschwerpunktes des Luftfahrzeuges befindet sich eine nicht näher dargestellte Vorratskammer für einen zusammengelegten Fallschirm 7. Diese Vorratskammer besitzt eine Verschlussklappe mit einem automatischen Öffnungsmechanismus.
Unterhalb des Rumpfes 1 befinden sich drei nicht näher dargestellte Vorratskammern für drei aufblasbare Ballons, nämlich einen Hauptballon 8 und einem linken Seitenballon 9 und einem rechten Seitenballon 10. Auch zu diesen Vorratskammern gehören Verschlussklappen mit automatischen Öffnungsmechanismen. Die Ballons 8, 9, 10 sind an den Verschlussklappen oder an Teilen des Rumpfes 1 so kurz und fest verankert, dass sie im aufgeblasenen Zustand einen engen Kontakt einnehmen und eine definierte Position zum Rumpf 1 aufrechterhalten.
Der Hauptballon 8 und die beiden Seitenballons 9, 10 besitzen sowohl Airbagqualitäten als auch Tragballonqualitäten und bestehen daher aus einem entsprechenden dehnbaren Material, das einerseits so stabil ist, dass es sich von außen angreifenden Kräften widersetzen kann und andererseits so leicht und flexibel ist, dass sich die Ballons 8, 9, 10 auf kleinstem Raum zusammenfalten und auch schnell wieder öffnen lassen.

Alle Ballons 8, 9, 10 besitzen jeweils ein Einlassventil, das über eine Zulaufleitung mit einem gemeinsamen Tank für ein Traggas verbunden ist, der zweckmäßigerweise ebenfalls in der Vorratskammer stationiert ist. Es sind auch alle die für einen Ballonbetrieb erforderlichen Auslöse- und Regeleinrichtungen vorhanden, auf die im weiteren nicht näher eingegangen wird.
Alle Ballons 8, 9, 10 besitzen eine längliche Form und sind parallel zur Achse des Luftfahrzeuges ausgerichtet. Dabei ist der Hauptballon 8 so positioniert, dass er sich im geöffneten Zustand mit seinem voluminösen Mittelpunkt etwa unterhalb des Masseschwerpunktes des Luftfahrzeuges befindet. Die beiden Seitenballons 9, 10 befinden sich in gleichen Abständen zu beiden Seiten des Hauptballons 8 und sind parallel zum Hauptballon 8 ausgerichtet. Ihre voluminösen Mittelpunkte befinden sich jeweils unterhalb der beiden Tragflügel 3.

Der Hauptballon 8 ist im aufgeblasenen Zustand größer als die beiden Seitenballons 9, 10 ausgebildet und so angeordnet, dass in jedem Fall sein zur Erde gerichteter Außenbereich 11 näher zur Erde liegt als die jeweiligen zur Erde gerichteten Außenbereiche 12, 13 der Seitenballons 9, 10. Dabei ist die Größe aller Ballons 8,9,10 in ihrer Gesamtheit auf die Größe und damit die Tragfähigkeit des Fallschirmes 7 abgestimmt und zwar in der Art, dass die Ballons 8,9,10 im Zusammenhang mit dem verwendeten Traggas einen wesentlichen Anteil an der gesamten Tragfähigkeit übernimmt. Dieser Anteil der Tragfähigkeit aller drei Ballons 8, 9, 10 beträgt maximal 45 % der Tragfähigkeit des Fallschirmes 7.
Als Traggas wird vorzugsweise Helium verwendet, weil es erheblich leichter als die atmosphärische Luft ist und damit einen größtmöglichen Auftrieb ermöglicht. Außerdem ist Helium nicht brennbar und kann daher im Falle des Ausbruchs eines Feuers Löschaufgaben übernehmen.

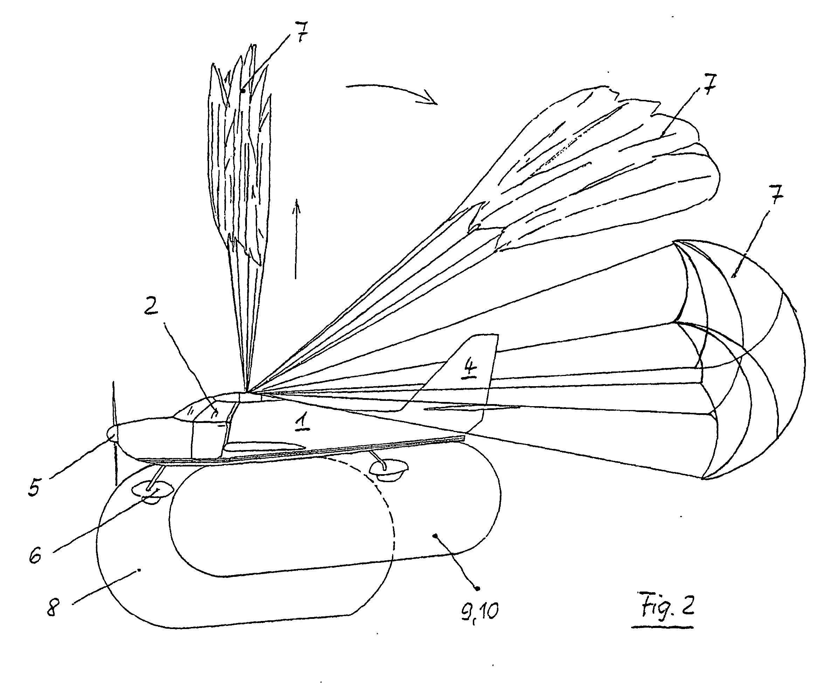

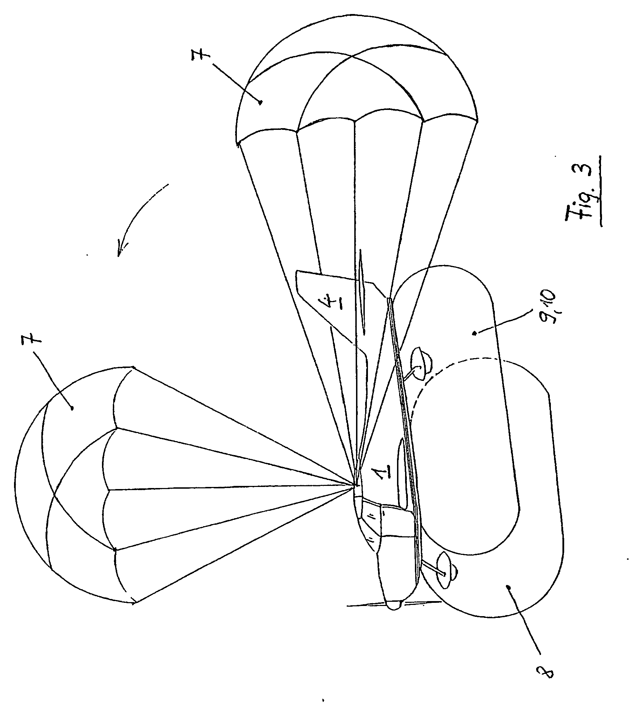

Gerät ein Luftfahrzeug in Luftnot, wird zunächst manuell oder automalisch die Vorratskammer des Fallschirmes 7 geöffnet und der Fallschirm 7 nach oben herausgeschleudert. Dabei nimmt der Fallschirm 7 die in der Fig. 2 gezeigte linke Position ein. Im Weiteren verlagert sich der Fallschirm 7 gegen die Flugrichtung nach hinten, auf dessen Wege sich der Fallschirm 7 voll öffnet, wie es die Fig. 2 mit ihrer rechten Postion des Fallschirmes 7 zeigt. Während des Öffnungsvorganges übt der Fallschirm 7 zunächst ein Bremsfunktion gegenüber dem Luftfahrzeug aus, sodass das Luftfahrzeug 7, wie es die Fig. 1 und 3 zeigen, wieder unter den Fallschirm 7 gerät. In dieser Position übernimmt der Fallschirm eine reine Tragefunktion. Unmittelbar nach der Einnahme dieser Position des Fallschirms 7 wird der Öffnungsmechanismus der Vorratskammer für die drei Ballons 8, 9, 10 aktiviert, sodass auch die Ballons 8, 9, 10 herausgeschleudert und explosionsartig mit dem Traggas gefüllt werden. Die so gefüllten Ballons 8, 9, 10 und der Fallschirm 7 bremsen das Luftfahrzeug von der ursprünglichen Fluggeschwindigkeit auf eine vertretbare Sinkgeschwindigkeit von etwa 3,5 m/s ab. Durch die Abstimmung der Grtißenverhältnisse und damit der geringeren Tragfähigkeit der drei Ballons 8, 9, 10, einerseits und der größeren Tragfähigkeit des Fallschirmes 7 andererseits ist gewährleistet, dass das Luftfahrzeug immer in seiner aufrechten Stellung verbleibt. Beim Auftreffen des sinkenden Luftfahrzeuges auf die übernehmen die drei Ballons 8, 9, 10 Airbagfunktionen. Dabei bekommt zunächst der Hauptballon 8 mit seinem Außenbereich 11 und erst dann die Seitenballons 9, 10 mit ihren Außenbereichen 12, 13 in Kontakt mit der Erde, wobei die Aufprallenergie in zwei Phasen vernichtet wird. Das Luftfahrzeug setzt dadurch mehr oder weniger sanft auf die Erde auf, wobei durch die Anordnung der beiden Seitenballons 9, 10 ein seitliches Abkippen des Luftfahrzeuges und damit mögliche Gefahrensituationen für die Insassen und ein Aufschlagen der Tragflügel 3 auf die Erde verhindert werden.

### Liste der Bezugszeichen

- 1: Rumpf
- 2: Insassenkabine
- 3: Tragflügel
- 4: Leitwerk
- 5: Antriebsmotor
- 6: Fahrwerk
- 7: Fallschirm
- 8: Hauptballon
- 9: Linker Seitenballon
- 10: Rechter Seitenballon
- 11: Außenbereich des Hauptballons
- 12: Außenbereich des linken Seitenballons
- 13: Außenbereich des rechten Seitenballons

## Patentansprüche

1. Luftfahrzeug mit einer Rettungseinrichlung, bestehend aus einem Fallschirm (7) und einem aufblasbaren und tragfähigen Ballon (8,9,10),
**dadurch gekennzeichnet, dass** der tragfähige Ballon (8, 9, 10) als ein kraftaufnelunender Airbag ausgebildet und unterhalb des Masseschwerpunktes des Luftfahrzeuges angeordnet ist und durch seine Größe und durch die Wahl des Traggases eine solche Tragfähigkeit besitzt, die kleiner als die Tragfähigkeit des Fallschirmes (7) ist.

2. Luftfahrzeug nach Anspruch 1,
**dadurch gekennzeichnet, dass** mehrere gleichgroße Ballons (8, 9, 10) mit einer ungeraden Anzahl vorgesehen sind, von denen ein Hauptballon (8) unter dem Masseschwerpunkt des Luftfahrzeuges angeordnet ist.

3. Luftfahrzeug nach Anspruch 2,
**dadurch gekennzeichnet, dass** der unter dem Masseschwerpunkt angeordnete Hauptballon (8) größer ausgebildet ist und mit seinem zur Erde gerichteten Außenbereich (11) näher zur Erde liegt als die Außenbereiche (12, 13) der Seitenballons (9, 10).

4. Luftfahrzeug nach Anspruch 1,
**dadurch gekennzeichnet, dass** mehre gleichgroße Ballons (8, 9, 10) mit einer geraden Anzahl vorgesehen sind, die jeweils in gleichen Abständen vom Masseschwerpunkt des Luftfahrzeuges angeordnet sind.

5. Luftfahrzeug nach einem der Ansprüche 3 oder 4,
**dadurch gekennzeichnet, dass** die Ballons (8, 9, 10) länglich ausgeführt und parallel zur Achse des Luftfahrzuges ausgerichtet sind und sich an der Länge der Ballons an die Länge des Luftfahrzeuges orientiert.

## Claims

1. Aircraft with a rescue device, consisting of a parachute (7) and an inflatable and load-bearing balloon (8, 9, 10), **characterised in that** the load-bearing balloon (8, 9, 10) is formed as a load-carrying air bag, is disposed below the centre of mass of the aircraft and, through its size and through the choice of buoyant gas, has a load-bearing capacity which is lower than the load-bearing capacity of the parachute (7).

2. Aircraft according to Claim 1,
**characterised in that** a plurality of balloons (8, 9, 10) of the same size and an uneven number are provided, a main balloon (8) of which is disposed below the centre of mass of the aircraft.

3. Aircraft according to Claim 2,
**characterised in that** the main balloon (8) disposed below the centre of mass is larger and lies with its outer region (11), which is directed towards the ground, nearer to the ground than the outer regions (12, 13) of the side balloons (9, 10).

4. Aircraft according to Claim 1,
**characterised in that** a plurality of balloons (8, 9, 10) of the same size and an even number are provided, which balloons are disposed at equal spacings from the centre of mass of the aircraft.

5. Aircraft according to either of Claims 3 and 4,
**characterised in that** the balloons (8, 9, 10) are elongate and oriented parallel to the axis of the aircraft, and the length of the balloons is adapted to the length of the aircraft.

## Revendications

1. Aéronef comprenant un dispositif de sauvetage, composé d'un parachute (7) et de ballons gonflables et capables de supporter une charge (8, 9, 10),
**caractérisé en ce que**
le ballon capable de supporter une charge (8, 9, 10) est un coussin gonflable (airbag) recevant une force et disposé en dessous du centre de gravité massique de l'aéronef, et, par sa taille et par le choix du gaz de la charge, sa portabilité est inférieure à la portabilité du parachute (7).

2. Aéronef selon la revendication 1,
**caractérisé par**
un nombre impair de ballons de même taille (8, 9, 10) dont un ballon principal (8) est disposé sous le centre de gravité massique de l'aéronef.

3. Aéronef selon la revendication 2,
**caractérisé en ce que**
le ballon principal (8) disposé sous le centre de gravité massique est plus grand, et sa zone extérieure (11) dirigée vers la terre se trouve plus près de la terre que les zones extérieures (12, 13) des ballons latéraux (9, 10).

4. Aéronef selon la revendication 1,
**caractérisé par**
un nombre pair de ballons de même taille (8, 9, 10) et, disposés à chaque fois à égale distance du centre de gravité massique de l'aéronef.

5. Aéronef selon l'une des revendications 3 ou 4,
**caractérisé en ce que**
les ballons (8, 9, 10) sont longitudinaux et dirigés parallèlement à l'axe de l'aéronef, la longueur des ballons étant orientée dans la longueur de l'aéronef.
